# EUROPEAN PATENT APPLICATION

(11) **EP 4 667 319 A1**
(43) Date of publication of application: **24.12.2025**
(21) Application number: 24712612.1
(22) Date of filing: 30.01.2024
(51) Int. Cl.: B62B 3/16

(54) **SHOPPING BASKET AND SYSTEM FOR A SHOPPING BASKET ENGAGED WITH SUB-SYSTEMS FOR ROTATING CASTERS WITH A BASE**

(30) Priority: 16.02.2023 PT 2023118518
(71) Applicant: Joalpe Industria de Expositores S.A., 6200-823 Covilhã (PT)
(72) Inventor: QUITÉRIO GARCIA CARVALHO, Agostinho Miguel, 2400-842 Leiria (PT); FREIRE FALCÃO TELES CARAMELO, Daniel, 1700-141 Lisboa (PT); SILVA GOMES JOSUÉ, Sónia Raquel, 2410-128 Leiria (PT); PEREIRA LOURINHO, Nuno Gonçalo, 6200-823 Tortosendo (PT); OLIVEIRA PEREIRA, Marco João, 6200-823 Tortosendo (PT)
(74) Representative: Moniz Pereira, Manuel
(86) International application number: PCT/PT2024/050003
(87) International publication number: WO 2024/172677

(57) **Abstract**

The invention relates to a shopping basket comprising a monobloc structure made of plastic material including side walls (1) and a basket base (2), which includes on its underside at least two detachable attachment subsystems for a caster (3). Each said detachable attachment subsystem for a caster (3) comprises a pair of rails, which are arranged in parallel to each other, and at least one clip, which are configured for detachable attachment with a caster base including a wheel (19). In preferred embodiments, the shopping basket comprises a carrying handle (14) and handle holes (16). The detachable attachment subsystems for a caster (3) allow the attachment and detachment of casters to be manually performed by a user, without causing damage to the monobloc structure of the shopping basket during caster replacement.

## Description

### Technical field

The present invention relates to shopping baskets comprising a monobloc structure made of plastic material, which are specially configured for use in commercial establishments, such as supermarkets, where the said shopping baskets also have construction characteristics that allow stacking in dedicated areas, either in an entrance area of the commercial establishment or in a shopping completion area.

### Prior art

Shopping baskets known in the prior art usually have rotating casters attached to the underside of their base to facilitate transportation of the shopping basket by the user.

European patent application EP2468604A1 describes that casters are attached to holes arranged at the edges formed between the bottom base and the side walls of the shopping basket. The coupling between a caster and the holes is accomplished by fixing a caster stem into said hole.

International patent application WO2010106214A1 reveals the attachment of casters to holes arranged in the base of the basket, wherein the ring that attaches to the caster fork is fixed in a hole disposed in the basket base.

European patent application EP2952407A1 reveals two caster attachment mechanisms to a basket base, the first mechanism being similar to that described in European patent application EP2468604A1, where the coupling between a caster and the holes is accomplished by fixing a caster stem into said hole. The second connection mechanism refers to the incorporation of fixed forks into the basket structure, which have an opening and holes arranged in the lower portions of the fork arms, so that the axis of a wheel can be connected.

### Technical problem

The connection mechanisms between casters and the base of shopping baskets revealed in the prior art use connection means that make caster replacement and maintenance difficult. In the context of the technical field of the present invention, the need for caster maintenance tasks is frequent, but the press-fit of the caster stems into the holes arranged in the basket base makes caster removal difficult.

Thus, the removal of casters in baskets revealed in the prior art requires specialized labour and specific tools in many situations, which makes the operation of replacing a defective caster attached to the base of a shopping basket more expensive and difficult. Ultimately, irreversible damage to the monobloc structure of the shopping basket may occur if improper removal of a caster occurs, resulting in damage to the shopping basket connection area. Such damage to the monobloc structure may render the shopping basket useless.

Thus, the prior art requires shopping baskets that have more efficient and practical connection mechanisms between the basket base and casters from the maintenance and caster replacement perspective, as such tasks are commonly performed in commercial areas that provide a large number of shopping baskets to consumers, thereby reducing the need for shopping cart production and reusing existing ones.

### Solution of the problem

The present invention solves the problems of the prior art by incorporating at least two detachable attachment subsystems for a caster into the base of a shopping basket, each said detachable attachment subsystem for a caster comprising a pair of rails, which are arranged in parallel to each other, and at least one clip. The said pair of rails and clips are configured for detachable attachment with the side edges of a caster base.

### Advantageous effects of the invention

The shopping basket, according to the present invention, presents the detachable attachment subsystem for a caster comprising, which is configured to provide detachable and facilitated attachment with a caster base.

Thus, the present invention provides a fitting system that is part of the monobloc structure of a shopping basket, allowing for easier replacement and maintenance of casters, as such tasks can be performed without the need for specialized labor or special tools. In practice, the fitting and removal of casters can be done manually by a user without causing damage to the monobloc structure of the shopping basket during caster replacement.

### Brief description of the figures

In order to promote an understanding of the principles according to the embodiments of the present invention, reference will be made to the embodiments illustrated in the figures and to the language used to describe them. However, it should be understood that there is no intention to limit the scope of the present invention to the content of the figures. Any subsequent changes or modifications to the inventive features illustrated here, as well as any additional applications of the principles and embodiments of the invention illustrated, which would normally occur to one skilled in the art having possession of this description, are considered within the scope of the claimed invention.

In an embodiment:
Figure 1 - illustrates a perspective front view of a shopping basket system according to the invention;
Figure 2 - illustrates a perspective rear view of a shopping basket system according to the invention;
Figure 3 - illustrates an internal view of an embodiment of the shopping basket with an internal divider;
Figure 4 - illustrates an internal view of an embodiment of the shopping basket without an internal divider;
Figure 5 - illustrates a perspective view of a first step of detachable attachment of a rotating caster subsystem with a shopping basket;
Figure 6 - illustrates a perspective view of a second step of detachable attachment of a rotating caster subsystem with a shopping basket;
Figure 7 - illustrates a perspective view of a third step of detachable attachment of a rotating caster subsystem with a shopping basket;
Figure 8 - illustrates a lateral view of the detachable attachment of a rotating caster subsystem with a shopping basket;
Figure 9 - illustrates a cross-sectional view of the detachable attachment of a rotating caster subsystem with a shopping basket;
Figure 10 - illustrates a perspective view of a clip comprised in a detachable attachment subsystem for a caster;
Figure 11 - illustrates a cross-sectional view of a clip comprised in a detachable attachment subsystem for a caster.

### Detailed description

The present invention relates, in a first aspect, to a shopping basket comprising a monobloc structure made of plastic material including side walls (1) and a basket base (2) in which:
each said detachable attachment subsystem for a caster (3) comprises a pair of rails (4), which are arranged in parallel to each other, and at least one clip (5); and wherein
the said pair of rails (4) is configured for detachable attachment with the side edges of a caster base (6); and wherein the said clip (5) comprises a resilient projection (7), which is arranged transversely with respect to the pair of rails (4) and is configured for detachable fixation with the caster base (6).

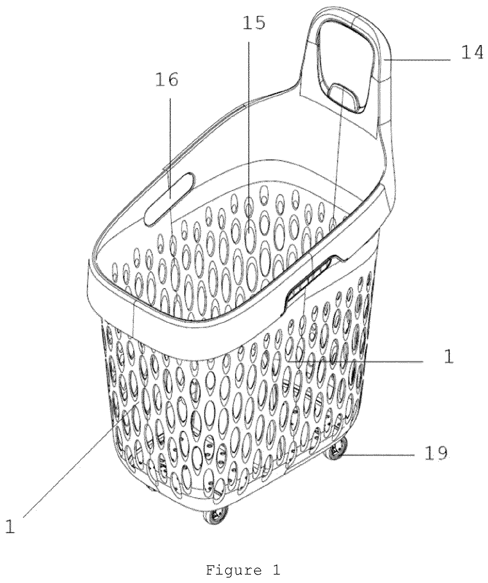

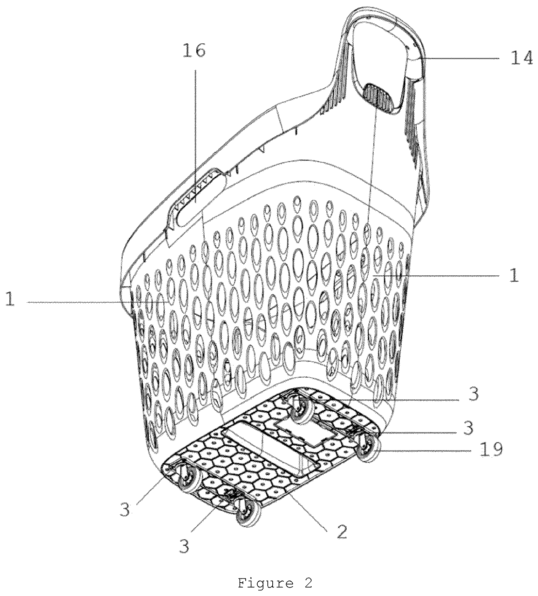

As illustrated in figures 1 and 2, the side walls (1) comprise a pair of longitudinal walls, which are substantially parallel to each other, and a pair of transverse walls, which are also substantially parallel to each other, wherein said side walls (1) and the basket base (2) delimit a basket accommodation zone. However, as will be appreciated by one skilled in the art, the shopping basket according to the present invention is not limited to a substantially parallelepipedal accommodation zone, other geometric shapes being allowed, such as triangular base prisms, quadrangular base, pentagonal base, and hexagonal base.

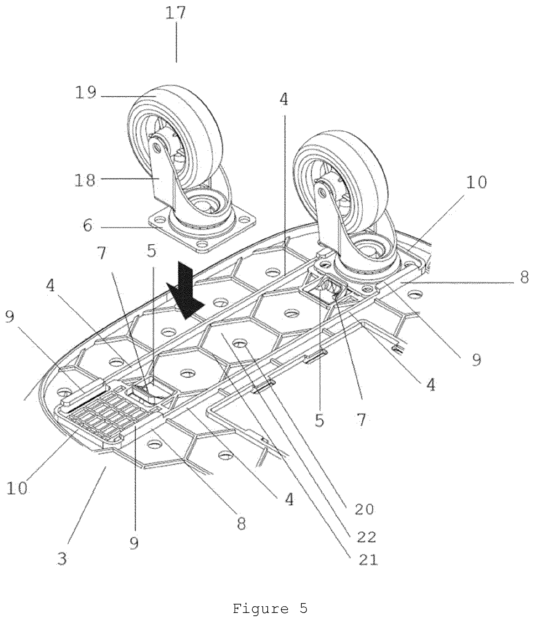

As illustrated in figure 5, each detachable attachment subsystem for a caster (3) comprises a pair of rails (4), which are arranged in parallel to each other, and at least one clip (5), wherein the said pair of rails (4) is configured for detachable attachment with the side edges of a caster base (6) and said clip (5) comprises a resilient projection (7), which is arranged transversely with respect to the pair of rails (4) and is configured for detachable fixation with the caster base (6).

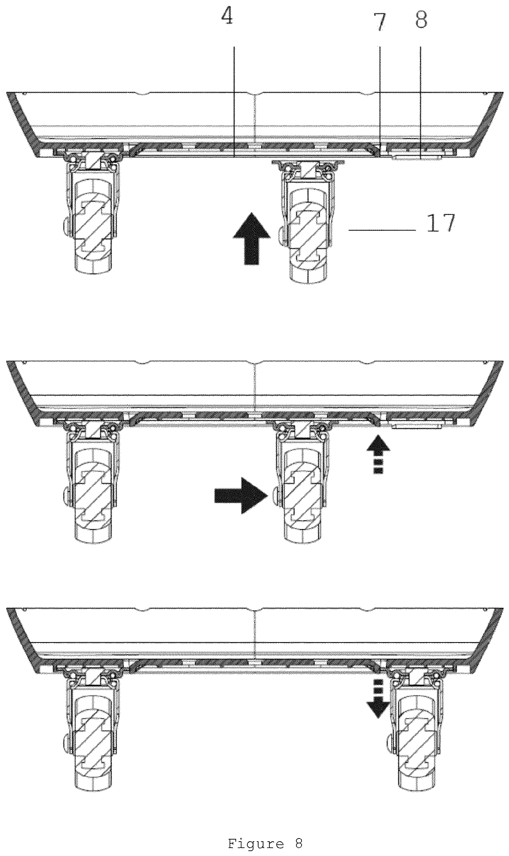

In particularly preferred embodiments, as illustrated in figures 5 and 8, each rail (4) comprises a first bulkhead side wall (8), which is connected orthogonally to the basket base (2), and an upper bulkhead wall (9), which is connected orthogonally to the first bulkhead side wall (8), wherein said upper bulkhead wall (9) is configured to overlap the underside of the caster base (6).

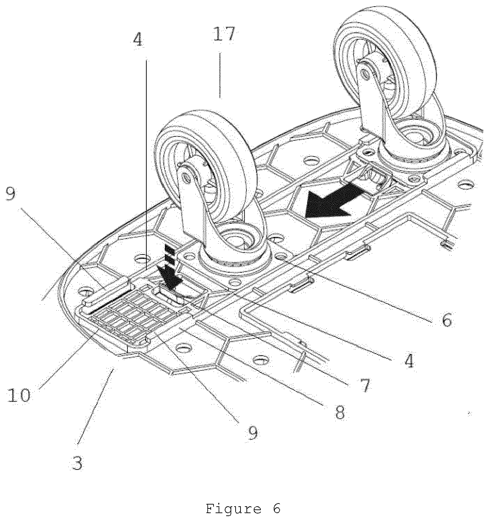

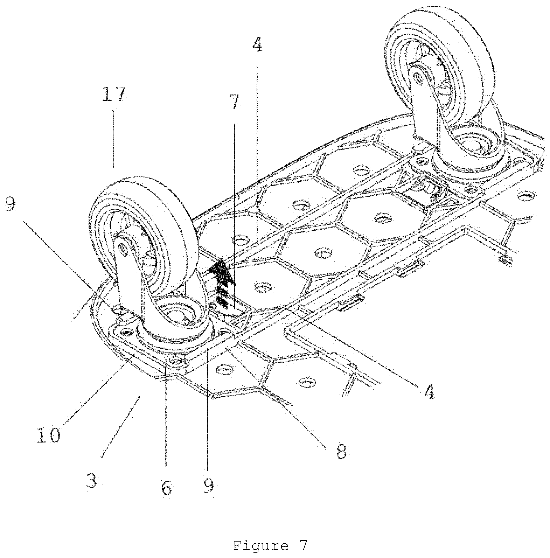

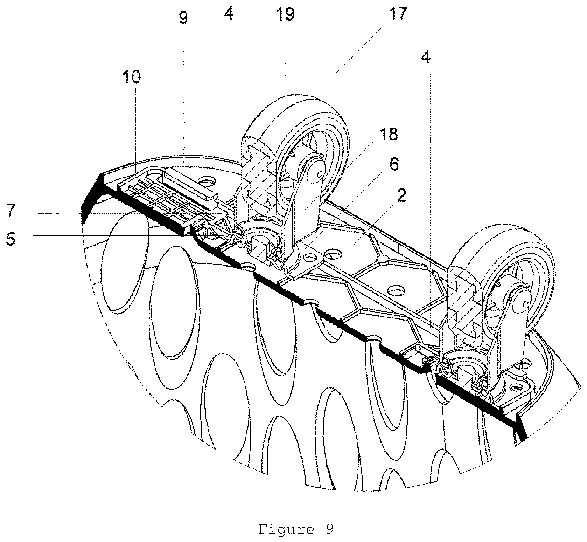

The detachable attachment between the caster base (6) and the detachable attachment subsystem for a caster (3) starts with a first step of accommodating the caster base (6) between the zone delimited by a pair of rails (4), which are arranged in parallel to each other, as can be seen in figure 5. A second step of said detachable attachment involves sliding the caster base (6) along the zone delimited by a pair of rails (4) until the caster base (6) encounters the resilient projection (7) of said clip (5) and presses said resilient projection (7) towards the basket base (2), as can be seen in figure 6 and in the lateral cross-sectional view of figure 9. The third step of the detachable connection between the caster base (6) and the detachable attachment subsystem for a caster (3) is shown in figure 7, in which the caster base (6) has reached a terminal position of the pair of rails (4) and the resilient projection (7) returns to its rest position, locking the caster base (6) in the terminal position of the pair of rails (4). In said terminal position, the caster base (6) is longitudinally immobilized by the contact between the upper bulkhead wall (9), arranged in parallel to each other, and the caster base (6), wherein the upper bulkhead walls (9) are configured to overlap the underside of the caster base (6). Additionally, in said terminal position, the caster base (6) is transversely immobilized by contact with the resilient projection (7) of the clip (5).

Therefore, the shopping basket according to the invention presents a detachable attachment subsystem for a caster (3) that is configured to fit or detach conveniently with a caster base (6), making the replacement or maintenance of rotating caster subsystems with a base (17) facilitated, without causing damage to the monobloc structure of the shopping basket or without the need for specialized labour to perform said replacement or maintenance tasks.

In the reverse manner as illustrated in figures 5 to 7, to disconnect a caster base (6) from a detachable attachment subsystem for a caster (3), it is sufficient to press the resilient projection (7) of the clip (5) towards the basket base (2) and slide the caster base (6) from the terminal position of the pair of rails (4) to a position anterior to the clip (5), causing the resilient projection (7) of the clip (5) to return to its rest position and the caster base (6) to be detached from the zone delimited by the terminal position of the pair of rails (4), wherein each rail (4) optionally comprises a first bulkhead side wall (8), which is connected orthogonally to the basket base (2), and an upper bulkhead wall (9), which is connected orthogonally to the first bulkhead side wall (8), wherein said upper bulkhead wall (9) is configured to overlap the underside of the caster base (6).

As illustrated in figures 5 to 7, the detachable attachment subsystem for a caster (3) comprises a second bulkhead side wall (10), which is connected orthogonally to the basket base (2) and is arranged transversely to the pair of rails (4), wherein the second bulkhead side wall (10) is optionally connected to a pair of first bulkhead side walls (8). Therefore, in these preferred embodiments, the terminal position of the attachment zone of the detachable attachment subsystem for a caster (3) is delimited by the pair of upper bulkhead walls (9), which are arranged in parallel, and by the second bulkhead side wall (10). Thus, the caster base (6) is transversely engaged by the second bulkhead side wall (10) and the resilient projection (7) of the clip (5), and longitudinally by the pairs of first bulkhead side walls (8) and upper bulkhead walls (9).

In particularly preferred embodiments, as illustrated in figures 5 to 7, the resilient projection (7) of the clip (5) has an oblique angle with respect to the plane that includes the terminal position of the attachment zone of the detachable attachment subsystem for a caster (3), which is delimited by the pair of upper bulkhead walls (9), arranged in parallel, and by the second bulkhead side wall (10).

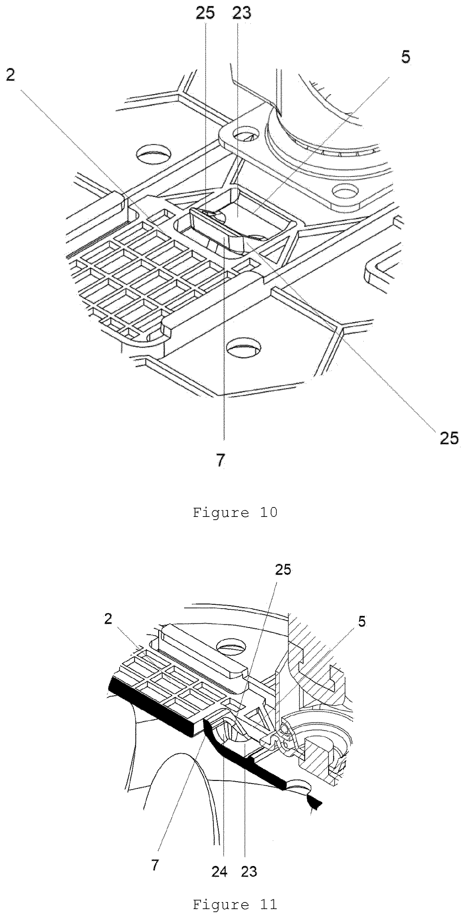

As visualized in figures 10 and 11, the clip (5) is connected to a recess (23) that is incorporated into the basket base (2), wherein a terminal portion of the resilient projection (7) is above the plane of the basket base (2) when it is in the rest position. The resilient projection (7) preferably comprises a plate (24) arranged at an oblique angle to the plane of the basket base (2) and at least one rod (25) that connects the plate (24) to the recess (23) arranged in the basket base (2), wherein said rod (25) is also arranged at an oblique angle to the plane of the basket base (2). Alternatively, the resilient projection (7) comprises a bar connected to at least one rod (25) that connects said bar to the recess (23) arranged in the basket base (2), wherein said rod (25) is arranged at an oblique angle to the plane of the basket base (2) and the bar is arranged parallel to the plane of the basket base (2). Preferably, the clip (5) has two lateral rods (25) arranged at an oblique angle to the plane of the basket base (2), wherein the lateral rods (25) are connected to the plate (24). When the resilient projection (7) is compressed by the caster base (6), the resilient projection (7) is housed inside the recess (23) incorporated into the basket base (2).

As illustrated in figure 2, the basket base (2) comprises on its underside two pairs of detachable attachment subsystems for a caster (3); wherein one of said pairs is arranged substantially parallel to the front edge of the basket base (2) and the other said pair is arranged substantially parallel to the rear edge of the basket base (2). In this preferred embodiment, the shopping basket is configured to connect with a pair of front caster subsystems with a base (17) and with a pair of rear caster subsystems with a base (17). As will be appreciated by one skilled in the art, other embodiments of the present invention are permissible, for example, the incorporation of two pairs of detachable attachment subsystems for a caster (3) in a rear portion of the basket base (2), and optionally the incorporation of a detachable attachment subsystem for a caster (3) centrally disposed in a front portion of the basket base (2).

In a preferred embodiments of the present invention, as illustrated in figures 5 to 7, each pair of detachable attachment subsystems for a caster (3), which are arranged in a rear or front portion of the basket base (2), are interconnected through their respective pairs of parallel rails (4) arranged in parallel. Therefore, in this embodiment, a pair of rails (4) is common to two detachable attachment subsystems for a caster (3).

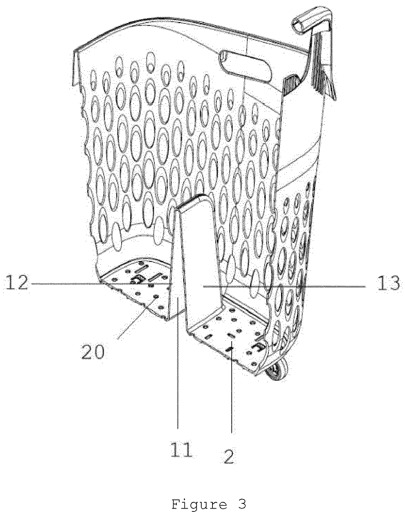

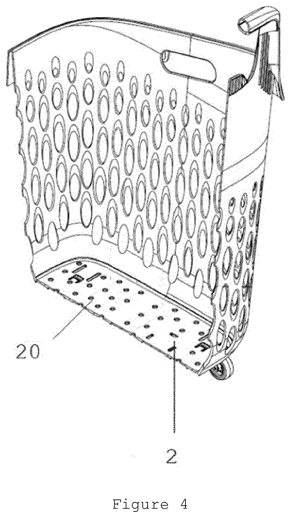

In other preferred embodiments of the present invention, as illustrated in figures 3 and 4, the basket base (2) comprises a plurality of holes (20) passing transversely through it, wherein said holes (20) contribute to reducing the amount of plastic material required for the manufacture of the monobloc structure, as well as acting as channels for draining water and cleaning products used in washing the baskets according to the invention.

In other preferred embodiments of the present invention, as illustrated in figure 5, the basket base (2) comprises a plurality of reinforcing walls (21) extending orthogonally from the underside of the basket base (2). Even more preferably, the reinforcement walls (21) delimit reinforcement cells (22) on the underside of the basket base (2). The reinforcement cells (22) can have different geometric shapes, which are established by the layout of the reinforcement walls (21), namely triangular, quadrangular, pentagonal, or hexagonal shapes. Preferably, the reinforcement cells (22) are interconnected, as exemplified in figure 5, which illustrates a plurality of condensed hexagonal reinforcement cells (22). Even more preferably, a hole (20) is arranged in the interior area of the reinforcement cell (22).

In other preferred embodiments according to the present invention, as illustrated in figure 3, the shopping basket comprises at least one divider (11), which projects from the basket base (2) towards the interior of the shopping basket and is formed by a first divider wall (12) and a second divider wall (13); wherein the lower edge of said first divider wall (12) is connected to a first portion of the basket base (2) and the lower edge of said second divider wall (13) is connected to a second portion of the basket base (2); and wherein the upper edges of the first divider wall (12) and the second divider wall (13) are interconnected. In this embodiment, the divider (11) provides for a partition of the storage area of the shopping basket, allowing for the proper distribution of the products stored in the shopping basket. An example of the need for at least one divider wall refers to the need to create separate storage areas for fragile products or for products that are incompatible with each other. As an example of fragile products, we can mention eggs, bread, and fruits. As an example of products incompatible with each other, we can mention food and cleaning products. As will be evident to one skilled in the art, the shopping basket may comprise a plurality of dividers (11), arranged in parallel or orthogonally to each other, or may dispense with this constructive element, as visualized in figure 4. In embodiments comprising dividers (11), these are arranged in the same position relative to the basket base (2), in order to allow a plurality of shopping baskets to be stackable with each other.

Preferably, as illustrated in figures 1 and 2, the monobloc structure of the shopping basket comprises a carrying handle (14), which is connected to the upper edge of a side wall (1). Preferably, the carrying handle (14) includes a pair of substantially parallel vertical rods and a bar connecting transversely to said pair of vertical rods, wherein the bar of the carrying handle (14) acts as a guiding element together with the pair of rods, which act as a handle fork.

In other preferred embodiments according to the present invention, as illustrated in figures 1 and 2, at least one of the side walls (1) comprises a plurality of holes (15) passing through the respective side wall (1). The holes (15) allow for the reduction of the mass of polymeric material required for the manufacture of the monobloc structure of the shopping basket, increase its mechanical resistance against vertical loads, and allow for the visualization of the content of the storage area of the shopping basket.

In other preferred embodiments according to the present invention, as illustrated in figures 1 and 2, each of the two opposite side walls (1) comprises a handle hole (16), which is arranged in an upper portion of said side wall (1). In these preferred embodiments, the upper edges of the side walls (1) are shaped to have a rim facing the outer face of the side walls (1), wherein said rim is extended along the perimeter comprising the connection of the side walls (1) together. Even more preferably, as illustrated in figure 2, a plurality of plates orthogonally connects the inner face of said rim and the inner face of the side wall (1) that is frontal to the portion of the rim, wherein the plurality of plates contributes to increasing the mechanical resistance of the monobloc structure, particularly in embodiments comprising a pair of lateral handle holes (16).

Preferably, the monobloc structure is made from a polymeric material, preferably selected from the group consisting of polypropylene, polyvinyl chloride, polyethylene, their mixtures, and their copolymers.

The present invention relates, in a second aspect, to a shopping basket system comprising a shopping basket, as defined in the first aspect of the invention, and at least two subsystems of swivel casters with a base (17); wherein:
each subsystem of swivel casters with a base (17) comprises a caster base (6), a fork (18), and a wheel (19), as illustrated in figure 5; and wherein
each caster base (6) is connected to the fork (18), and the two arms of said fork (18) are connected to a wheel (19) rotation axis, as illustrated in figure 5; and wherein each caster base (6) is detachably engaged with the pair of rails (4) and with the resilient projection (7) of the clip (5), which are incorporated in the detachable attachment subsystem for a caster (3) of the shopping basket, as illustrated in figures 5 to 7.

As expressions "about" and "approximately" as used in this description refer to a range of plus or minus 10% of the specified number.

As used throughout this patent application, the term "or" is used in an inclusive sense rather than an exclusive sense unless the exclusive sense is clearly defined in a specific situation. In this context, a phrase like "X uses A or B" should be interpreted as including all relevant inclusive combinations, for example, "X uses A", "X uses B", and "X uses A and B".

As used throughout this patent application, the indefinite articles "a" or "an" should generally be interpreted as "one or more", unless the sense of a singular modality is clearly defined in a specific situation.

As presented in this description, terms related to examples should be interpreted for the purpose of illustrating an example of something and not indicating a preference.

As used in this description, the term "substantially" means that the actual value is within the range of about 10% of the desired value, variable, or related limit, particularly within about 5% of the desired value, variable, or related limit, or especially within about 1% of the desired value, variable, or related limit.

The above-described subject matter is provided as an illustration of the present invention and should not be interpreted to limit it. The terminology employed for the purpose of describing specific embodiments according to the present invention should not be interpreted to limit the invention. As used in the description, definite and indefinite articles, in their singular form, are understood to also include plural forms, unless the context of the description explicitly indicates otherwise. It will be understood that the terms "comprise" and "include" when used in this description specify the presence of features, elements, components, steps, and related operations, but do not exclude the possibility of other features, elements, components, steps, and operations also being contemplated.

All changes, as long as they do not modify the essential features of the following claims, should be considered within the scope of protection of the present invention.

### List of reference signs

1. A side wall
2. A basket base
3. A detachable attachment subsystem for a caster
4. A rail
5. A clip
6. A caster base
7. A resilient projection
8. A first bulkhead side wall
9. An upper bulkhead wall
10. A second bulkhead side wall
11. A divider
12. A first divider wall
13. A second divider wall
14. A carrying handle
15. A side wall hole
16. A handle hole
17. A subsystem of swivel caster with a base
18. A fork
19. A wheel
20. A basket base hole
21. A reinforcement Wall
22. A reinforcement cell delimited by reinforcement walls
23. A recess in the basket base
24. A plate of the resilient projection
25. A rod of the resilient projection

### List of citations

### Patent documents

European patent application EP2468604A1 by Angel S. and Silvia S., published on June 27, 2012;
International patent application WO2010106214A1 by Puertolas et al., published on September 23, 2010;
European patent application EP2952407A1 by Morcillo T., published on December 9, 2015.

## Claims

1. A shopping basket comprising a monobloc structure made of a plastic material including side walls (1) and a basket base (2), **characterized in that:**
the basket base (2) comprising on its underside at least two detachable attachment subsystems for a caster (3); wherein
each said detachable attachment subsystem for a caster (3) comprises a pair of rails (4), which are arranged in parallel to each other, and at least one clip (5); and wherein
the said pair of rails (4) is configured for detachable engagement with the lateral edges of a caster base (6); and
wherein
the said clip (5) comprises a resilient projection (7), which is transversely arranged relative to the pair of rails (4) and is configured for detachable fixation with the caster base (6).

2. The shopping basket according to the preceding claim, **characterized in that** each rail (4) comprises a first bulkhead side wall (8), which is connected orthogonally to the basket base (2), and an upper bulkhead wall (9), which is connected orthogonally to the first bulkhead side wall (8), wherein the said upper bulkhead wall (9) is configured to overlap the underside of the caster base (6).

3. The shopping basket according to the preceding claim, **characterized in that** the detachable attachment subsystem for a caster (3) comprises a second bulkhead side wall (10), which is connected orthogonally to the basket base (2) and is arranged transversely to the pair of rails (4), wherein the second bulkhead side wall (10) is optionally connected to a pair of first bulkhead side walls (8).

4. The shopping basket according to any of the preceding claims, **characterized in that** the basket base (2) comprises on its underside two pairs of detachable attachment subsystems for a caster (3); wherein one of said pairs is substantially parallel to the front edge of the basket base (2) and the other said pair is substantially parallel to the rear edge of the basket base (2).

5. The shopping basket according to the preceding claim, **characterized in that** each pair of detachable attachment subsystems for a caster (3) is interconnected through their respective pairs of rails (4).

6. The shopping basket according to any of the preceding claims, **characterized by** comprising at least one divider (11), which projects from the basket base (2) towards the interior of the shopping basket and is formed by a first divider wall (12) and a second divider wall (13); wherein the lower edge of said first divider wall (12) is connected to a first portion of the basket base (2) and the lower edge of said second divider wall (13) is connected to a second portion of the basket base (2); and wherein the upper edges of the first divider wall (12) and the second divider wall (13) are interconnected.

7. The shopping basket according to any of the preceding claims, **characterized in that** the said monobloc structure made of a plastic material comprises a carrying handle (14), which is connected to the upper edge of a side wall (1).

8. The shopping basket according to any of the preceding claims, **characterized in that** at least one of the side walls (1) comprises a plurality of holes (15) passing through the respective side wall (1).

9. The shopping basket according to any of the preceding claims, **characterized in that** each of the two side walls (1), which are opposite each other, comprises a handle hole (16), which is arranged in an upper portion of the respective side wall (1).

10. The shopping basket according to any of the preceding claims, **characterized in that** the monobloc structure is made of a polymeric material selected from the group consisting of polypropylene, polyvinyl chloride, polyethylene, their mixtures, and their copolymers.

11. The shopping basket according to any of the preceding claims, **characterized in that** the clip (5) is connected to a recess (23) incorporated in the basket base (2), wherein a terminal portion of the resilient projection (7) is above the plane of the basket base (2) when in the resting position.

12. The shopping basket according to the preceding claim, **characterized in that** the resilient projection (7) comprises a plate (24), which is arranged at an oblique angle to the plane of the basket base (2), and at least one rod (25) connecting the plate (24) to the recess (23) arranged in the basket base (2), wherein said rod (25) is also arranged at an oblique angle to the plane of the basket base (2).

13. The shopping basket according to claim 11, **characterized in that** the resilient projection (7) comprises a bar connected to at least one rod (25) connecting said bar to the recess (23) arranged in the basket base (2), wherein said rod (25) is arranged at an oblique angle to the plane of the basket base (2) and the bar is arranged in parallel to the plane of the basket base (2).

14. A shopping basket system **characterized by** comprising a shopping basket, as defined in any of the preceding claims, and at least two swivel caster subsystems with a base (17);
wherein each swivel caster subsystem with a base (17) comprises a caster base (6), a fork (18), and a wheel (19); and wherein
each caster base (6) is connected to the fork (18), and the two arms of said fork (18) are connected to a wheel (19) rotation axis; and wherein
each caster base (6) is detachably engaged with the pair of rails (4) and with the resilient projection (7) of the clip (5), which are incorporated in the detachable attachment subsystem for a caster (3) of the shopping basket.
